# EUROPÄISCHE PATENTSCHRIFT

(11) **EP 2 202 496 B1**
(45) Veröffentlichungstag und Bekanntmachung des Hinweises auf die Patenterteilung: **05.08.2015**
(21) Anmeldenummer: 09180057.3
(22) Anmeldetag: 21.12.2009
(51) Int. Cl.: G01F 11/02, G01F 15/00

(54) **Kolbendosierer mit überwachtem Ventil**
Piston-type dosing device with supervised valve
Doseur à piston doté d'une soupape contrôlée

(30) Priorität: 23.12.2008 DE 102008062846
(43) Veröffentlichungstag der Anmeldung: 30.06.2010
(73) Patentinhaber: Scheugenpflug AG, 93333 Neustadt/Donau (DE)
(72) Erfinder: Scheugenpflug, Erich, 93333 Neustadt/Donau (DE)
(74) Vertreter: Weickmann & Weickmann

(56) Entgegenhaltungen:
- WO-A1-97/16776
- WO-A1-2004/102052
- WO-A1-2008/135417
- DE-A1- 3 922 660
- US-B1- 6 419 462

## Beschreibung

### I. Anwendungsgebiet

Die Erfindung betrifft Kolbendosierer mit überwachten Ventilen, insbesondere Einlassventilen, sowie ein Verfahren zum Überwachen des Kolbendosierers.

### II. Technischer Hintergrund

Bei Kolbendosierern wird in einem Dosierzylinder, der bei zurückgezogenem Dosierkolben die gewünschte Dosiermenge aufnimmt, die jeweilige, meist pastöse, Komponente durch Zurückziehen des Dosierkolbens über eine angeschlossene Einlassleitung aus einem Vorratsbehälter aufgezogen oder auf Grund des Überdruckes im Vorratsbehälter in den Dosierzylinder eingeströmt und der Dosierzylinder gefüllt. Anschließend wird die im Dosierzylinder enthaltene Dosiermenge durch Vorwärtsschieben des Dosierkolbens über eine Auslassleitung der gewünschten Auslassöffnung, meist einer Düse oder einem vorgeschalteten Mischrohr, zugeführt und ausdosiert. Dies erfolgt meist für zwei Dosierzylinder gleichzeitig nebeneinander für z.B. Binder und Härter eines Zweikomponentenklebers.

Hierfür ist in jeder Einlassleitung ein Einlassventil und in jeder Auslassleitung ein Auslassventil, in der Regel I/O-Ventile, eingebaut, um beim Befüllen des Dosierzylinders die Auslassleitung geschlossen zu halten und beim Ausdosieren zur Auslassöffnung hin die Einlassleitung geschlossen zu halten.

Die Ein- und Auslassventile sind häufig als Membranventile ausgebildet, bei der die zu dosierende Komponente sich nur auf einer Seite der Membran befindet, die von der anderen Seite der Membrane aus mittels eines Schließzylinders gegen eine Pressfläche gepresst werden kann, um den Durchfluss durch das Ventil für die jeweilige Komponente zu sperren.

Um die Prozesssicherheit zu erhöhen, werden umfangreiche Anstrengungen unternommen, um Fehler beim Einsatz des Kolbendosierers zu vermeiden bzw. aufgetretene Fehler so schnell wie möglich zu erkennen und ihre Ursache bestimmen zu können.

So kann das Dosierergebnis zu ungenau sein, also die dosierte Menge zu gering sein, indem überhöhte Arbeitsdrücke im Dosierer auftreten. Der Grund hierfür könnte sein, dass
- ein zu dünnes Mischrohr bzw. eine zu dünne Dosiernadel bei Einkomponentendosierern montiert ist,
- im Auslassbereich des Dosierers Bohrungen verstopft sind aufgrund unzureichender oder falscher Wartungsarbeiten,
- sich im Mischrohr bereits zu sehr ausgehärtetes Material befindet,
- die Dosiergeschwindigkeit, also der Füll- und Entleervorgang des Dosierzylinders, zu schnell durchgeführt wird, oder
- der Materialeingangsdruck beim Befüllen der Dosiereinrichtung zu hoch ist.

Eine weitere manchmal auftretende Fehlerquelle kann das Reißen der Membran sein, die vor allem beim Dosieren von Komponenten, die abrasive Partikel enthalten, einer relativ schnellen Abnutzung unterliegen und bei nicht rechtzeitigem Bemerken einer zu starken Abnutzung ein Riss oder auch eine Undichtigkeit aufgrund nicht mehr glatter, gegen die Pressfläche gerichteter, Oberfläche der Membran die Folge sein kann.

Eine weitere manchmal auftretende Fehlerquelle kann sein, dass Luft aus dem Vorratsbehälter mit dem zu dosierenden Material in einen oder mehrere Dosierzylinder gelangt, wodurch beim Entleeren die dosierte Menge wegen der eingebrachten Luft zu gering ist.

Bisher wurde zur Überwachung des Membranverschleißes bei Inbetriebnahme einer Anlage mit einer neuen zu fördernden Komponente der Wechselintervall der Membran zunächst sehr kurz festgelegt, und beim ersten Wechseln der Verschleißzustand der Membran geprüft und anschließend nach Möglichkeit die Länge des Wechselintervalls schrittweise auf ein vertretbares Maß vergrößert, ohne ein Reißen der Membran durch Verschleiß zu riskieren.

Die Membranventile, insbesondere das Einlassventil, wurden dagegen nicht auf ihre Funktion überwacht, insbesondere nicht durch Überwachung der Position des Schließkolbens.

Wenn somit beim Ausdosieren des Materials durch die Auslassleitung das Einlassventil nicht vollständig korrekt geschlossen war - beispielsweise weil ein zu hoher Widerstand im Auspressweg vorhanden war oder der Arbeitsdruck in der Einlassleitung vom Vorratsbehälter her unzulässig hoch war oder ähnliches - wird ein Teil des Materials aus dem Dosierzylinder nicht über die Auslassleitung wie gewünscht zur Auslassöffnung gepresst, sondern durch das teilweise oder ganz offene Einlassventil zurück in den Vorratsbehälter, und das ausdosierte Volumen ist zu gering.

Das gleiche tritt natürlich auf, wenn der Dosierzylinder gar nicht vollständig mit Material gefüllt war, bevor das Ausdosieren begann, beispielsweise weil der Dosierkolben nicht vollständig oder zu schnell in die zurückgezogene Position gefahren wurde.

Aus der DE 3922660 A1 ist als nächstreichendem Stand der Technik ein gattungsgemäßer Kolben-Dosierer bekannt.

Aus der WO 2004/102052 A1 ist eine Hubkolbenpumpe zum Fördern von Flüssigkeit bekannt, die mit der Förderleitung nur über eine einzige Stichleitung verbunden ist und stromabwärts sowie stromaufwärts der Mündung der Stichleitung in eine Förderleitung jeweils ein Rückschlagventil aufweist, dessen Verschleißzustand durch Schallaufnehmer an diesen Ventilen detektiert werden soll.

Auf Seite 7 erwähnt diese Schrift auch einen Stellungsgeber, um den Ventilzustand zu ermitteln, jedoch ist weder gesagt, wo dieser angeordnet sein soll, welches Teil des Ventils hinsichtlich seiner Position überwacht werden soll und welche Stellung dieses Elementes überwacht werden soll. Vor allem aber stellt diese Schrift selbst einen solchen Positionsgeber als unsinnig dar, da der Verschleißzustand bereits aufgrund der Schallanalyse bekannt sei.

Aus der WO 2008/135417 A1 soll der Verschleiß einer Ventilstelleinrichtung dadurch ermittelt werden, dass die Stelleinrichtung für das entsprechende Ventil deaktiviert und anschließend wieder aktiviert wird und die dabei zurückgelegten Wege des Stellelementes mit den im ursprünglichen Zustand des Ventils zurückgelegten Weglängen verglichen werden. Abweichungen deuten auf einen Verschleiß der Stelleinrichtung und/oder des Ventils hin.

Es werden also zurückgelegte Weglängen verglichen, jedoch keine Absolutpositionen bestimmt.

### III. Darstellung der Erfindung

### a) Technische Aufgabe

Es ist daher die Aufgabe gemäß der Erfindung, ein Verfahren zum Überwachen des Kolbendosierers und insbesondere von dessen Ventilen zu schaffen als auch einen entsprechenden Kolbendosierer, mit dessen Hilfe jederzeit eine exakte Dosiermenge erreicht werden kann.

### b) Lösung der Aufgabe

Diese Aufgabe wird durch die Merkmale der Ansprüche 1 und 12 gelöst. Vorteilhafte Ausführungsformen ergeben sich aus den Unteransprüchen.

Indem zumindest bei den Einlassventilen, besser bei allen Ventilen, die Stellung des Schließelementes, welches den Verschluss des Ventils bewirkt, insbesondere des Schließkolbens, detektiert wird, wird eine der häufigsten Fehlerursachen für zu geringe Dosiermengen vermieden bzw. sofort erkannt, da bereits beim ersten Nichterreichen des Schließzustandes ein Alarm ausgegeben wird.

Gleiches kann auch für das Nichterreichen des Offenzustandes sowohl beim Einlass- als auch beim Auslassventil gelten, wobei das Detektieren der Zwischenzustände in Abhängigkeit von der Zeit sogar noch weiteren Aufschluss über das Verhalten des Ventils gibt.

Eine Überwachung der Kolbenstellung ist besonders bei der Bauform eines Membranventiles sinnvoll, da die Membran funktionsbedingt aus einem relativ weichen Material bestehen muss. Dennoch macht eine solche Überwachung auch bei Sitzventilen oder auch Schieberventilen einen Sinn, bei denen relativ harte Dichtflächen gegeneinander gepresst werden. Auch dabei findet ein Verschleiß statt und führt zu Undichtigkeiten.

Zur Überwachung werden die vorgegebenen Sollwerte der jeweiligen Stellungen, also Offenstellung und/oder Schließstellung, mit den Istwerten verglichen, die ein entsprechender Positionssensor, der am Schließelement, beispielsweise dem Schließkolben, angeordnet ist, der Steuerung meldet.

Anstelle oder auch ergänzend zur Abgabe eines Alarms können in diesem Fall automatisch weitere Überwachungsschritte veranlasst werden, um auch möglichst schnell Aufschluss über die Ursache des mangelhaften Zustandes zu gewinnen:
- So kann der Versorgungsdruck in der Einlassleitung gemessen werden, um zu überprüfen, dass sich dieser im zulässigen Bereich befindet,
- ebenso kann der steuernde Luftdruck auf der Steuerseite des Membranventils gemessen werden und mit den Sollwerten verglichen werden, da auch ein zu niedriger Steuerdruck eine mangelhafte Schließung der Schließmembran zur Folge haben kann, ebenso wie ein zu hoher Versorgungsdruck, der gegen das Einlassventil anliegt,
- darüber hinaus kann der Versorgungsdruck in der Einlassleitung auch bei korrekt angezeigter Offen- und Schließstellung regelmäßig überprüft werden, insbesondere indem der dynamische Druck am Einlassventil in der Einlassleitung während des Füllens des Dosierzylinder gemessen wird, und
- die Sollwerte können ferner automatisch bestimmt werden zu Beginn der Inbetriebnahme des Kolbendosierers mit einem neuen zu dosierenden Material. Alternativ können die Sollwerte auch manuell in die Steuerung eingegeben werden.

Neben dieser Grobdetektion der - vor allem - Schließstellung des Einlassventiles wird erfindungsgemäß auch eine Feindetektion durchgeführt, die das Ermitteln des Verschleißzustandes und rechtzeitiges Austauschen z.B. der Schließmembran oder des anderen verantwortlichen Schließelementes, z.B. des Ventilkörpers eines Sitzventils, zum Ziel hat.

Hierfür wird die Veränderung der Ist-Position des Schließkolbens in der Schließstellung des Einlassventils von Beginn an entweder bei jedem Hub oder in bestimmen zeitlichen oder numerischen Abständen ermittelt, und sobald die Veränderung dieser Ist-Position ein vorher festgelegtes Maß, nämlich z.B. den zulässigen Dicken-Verschleißweg der Schließmembran, erreicht oder übersteigt, wird eine Wechselanweisung an den Betreiber für die Schließmembran ausgegeben.

Da der Verschleißwert, also z.B. der Dicken-Verschleiß der Schließmembran, von Parametern wie Pneumatikdruck am Ventil, Temperatur des zu dosierenden Materials und/oder des Dosierers, Parameter des Materials der Membran etc. abhängen kann, können einer oder mehrere dieser Parameter zusätzlich gemessen und von der Steuerung für die Festlegung des zulässigen Dicken-Verschleißwertes mitberücksichtigt werden.

So könnte es beispielsweise sein, dass bei einer hohen Temperatur des zu dosierenden Materials die Schließmembran durch die hohe Temperatur weicher und elastischer wird, und sich bei gleichem Schließdruck stärker zusammenpressen lässt, so dass dann der Dicken-Verschleißwert mit steigender Temperatur höher gesetzt werden muss.

Dabei werden die Ist-Werte sowohl für die Grobdetektion als auch für die Feindetektion vorzugsweise mit dem gleichen einzigen Positionssensor pro Ventil durchgeführt.

Da eine weitere mögliche Ursache für zu geringes Dosiervolumen eine beim Füllvorgang des Dosierzylinders nicht vollständig zurückgezogene Dosierkolben sein kann, wird auch die den Dosierkolben bewegende Kolbenstange und/oder der Dosierkolben selbst hinsichtlich vor allem des Erreichens der vollständig zurückgezogenen Stellung detektiert, vorzugsweise mit Hilfe eines Positionssensors der gleichen Bauart wie er zur Überwachung der Ventile verwendet wird.

Dabei sind jedoch zwei unterschiedliche Vorgehensweisen beim Füllen des Dosierzylinders zu unterscheiden:
Entweder wird der Dosierkolben über die Kolbenstange mit Hilfe des Kolbenstangenantriebes beim Füllen des Dosierzylinders aktiv zurückgezogen und dadurch das zu dosierende Medium aus einem Vorratsbehälter über die Einlassleitung in den Dosierzylinder eingesaugt.

Die andere Möglichkeit besteht darin, dass in dem Vorratsbehälter ein Überdruck herrscht bzw. in der Einlassleitung eine Pumpe angeordnet ist, und das zu dosierende Medium in den Dosierzylinder aufgrund dieses Überdruckes hineinströmt, also eingepresst wird. In diesem Fall muss der Dosierkolben beim Füllen nicht aktiv zurückgezogen werden, sondern wird aufgrund des mit Überdruck in den Dosierzylinder einströmenden Mediums zurückgedrängt. Dabei kann jedoch der Kolbenstangenantrieb dennoch in Kontakt mit der Kolbenstange und damit dem Dosierkolben stehen, um einen Anschlag in der vollständig zurückgezogenen Stellung des Dosierkolbens, also der vollständig gefüllten Position des Dosierzylinders mit dem gewünschten Dosiervolumen, zu bieten. Trotz der nach dem Füllen in der richtigen zurückgezogenen Endposition befindlichen Lage des Dosierkolbens kann es sein, dass im Dosierzylinder eine zu geringe Menge an zu dosierendem Medium aufgenommen ist, und zwar dann, wenn zusätzlich zu dem zu dosierenden Medium unerwünschterweise Luft in den Dosierzylinder gelangt ist, beispielsweise weil diese Luft bereits im Vorratsbehälter vorhanden war und über die Einlassleitung in den Dosierzylinder gelangt ist.

Um dies zu detektieren, kann bei einem Füllen des Dosierzylinders mittels Überdruck und dadurch zurückweichendem Dosierkolben nach dem Erreichen der korrekten zurückgezogenen Endstellung des Dosierkolbens, die in der Regel durch Anlage am Kolbenstangenantrieb begrenzt wird, der Kolbenstangenantrieb vom Dosierkolben gelöst werden - egal, ob an der Verbindungsstelle zwischen Kolbenstangenantrieb und Kolbenstange oder zwischen Kolbenstange und Dosierkolben - und detektiert werden, ob sich daraufhin der Dosierkolben noch weiter rückwärts bewegt. Dies würde nur dann der Fall sein, wenn im Dosierzylinder Gas, also unerwünscht eingesaugte oder eingepresste Luft, vorhanden war und durch den Einpressvorgang komprimiert wurde und sich nun nach Entfernen des Kolbenstangenantriebes und dessen Gegenkraft aus den Dosierkolben weiter nach hinten schiebt.

Bei einem Einsaugen des zu dosierenden Mediums in den Dosierzylinder durch aktives Zurückziehen des Dosierkolbens ist auch beim Zurückbewegen des Dosierkolbens eine Wirkverbindung zwischen Kolbenstangenantrieb und Dosierkolben notwendig. Bei dieser Vorgehensweise kann unzulässigerweise eingesaugte Luft ebenfalls durch Lösen der Verbindung zwischen Kolbenstangenantrieb und Dosierkolben detektiert werden:
In diesem Fall würde sich bei eingeschlossener Luft im Dosierzylinder der Dosierkolben nicht weiter nach hinten, sondern nach vorne bewegen, da beim Einsaugen die Luft unter einem Unterdruck stand, der nach Abkoppeln des Kolbenstangenantriebes nicht mehr vorliegt.

Eine zusätzliche Bewegung des Dosierkolbens nach Erreichen der regulären zurückgezogenen Endstellung kann also durch einen weiteren Sensor nach Abkoppeln des Kolbenstangenantriebes im Dosierzylinder enthaltene Luft detektieren.

Eine zusätzliche Detektionsmethode hierfür stellt auch - nach Erreichen der zurückgezogenen Endstellung des Dosierkolbens - dessen Verfahren nach vorne, allerdings bei geschlossenem sowohl Einlass- als auch Auslassventil dar, denn auch dabei würde im Dosierzylinder enthaltene Luft komprimiert werden und der Dosierkolben ließe sich nach vorne bewegen. Allerdings erfordert dies eine hohe Schließkraft sowohl des Einlass- als auch des Auslassventiles, wofür das Auslassventil ein aktiv angesteuertes Ventil sein muss, was den Herstellungsaufwand des Dosierers erhöht.

Vorzugsweise wird auch die vollständig vorgeschobene Stellung der Kolbenstange bzw. des Dosierkolbens analog überwacht, da auch das nicht vollständige Ausfahren ebenso ein Grund für zu geringes Dosiervolumen sein kann.

Eine weitere Fehlerquelle kann das Reißen der Schließmembran sein:
Um das Reißen der Schließmembran sofort zu bemerken, wird erfindungsgemäß auf der von dem zu fördernden Material abgewandten Seite der Schließmembran ein entsprechender Sensor, vorzugsweise ein Feuchtigkeitssensor, angeordnet, da nur bei einem Riss in der Schließmembran Feuchtigkeit auf die andere Seite der Schließmembran vordringen kann.

Der erfindungsgemäße Kolbendosierer weist daher Einlass- und Auslassventile in der Form von Membranventilen auf, deren Schließmembran auf der vom zu fördernden Medium abgewandten Seite von einem Schließkolben beaufschlagt wird, der seinerseits wiederum mittels Druckluft in axialer Richtung bewegt wird, vorzugsweise indem wiederum auf der Rückseite des Schließkolbens eine zweite Membran, die Steuermembran, angeordnet ist.

Die Druckluftbeaufschlagung befindet sich dann auf der vom Schließkolben abgewandten Seite der Steuermembran.

An jedem zu überwachenden Ventil befindet sich ein Positionssensor genauso wie an jeder der zu überwachenden Kolbenstangen.

Alle Sensoren sind mit einer zentralen Überwachungssteuerung verknüpft.

### c) Ausführungsbeispiele

Ausführungsformen gemäß der Erfindung sind im Folgenden beispielhaft näher beschrieben. Es zeigen:
- Fig. 1:: einen Schnitt durch die beiden Einlassleitungen und darin befindlichen Einlassventile,
- Fig. 2:: Detaildarstellungen eines solchen Ventils, und
- Fig. 3:: Schnitte durch einen der beiden Dosierkolben.

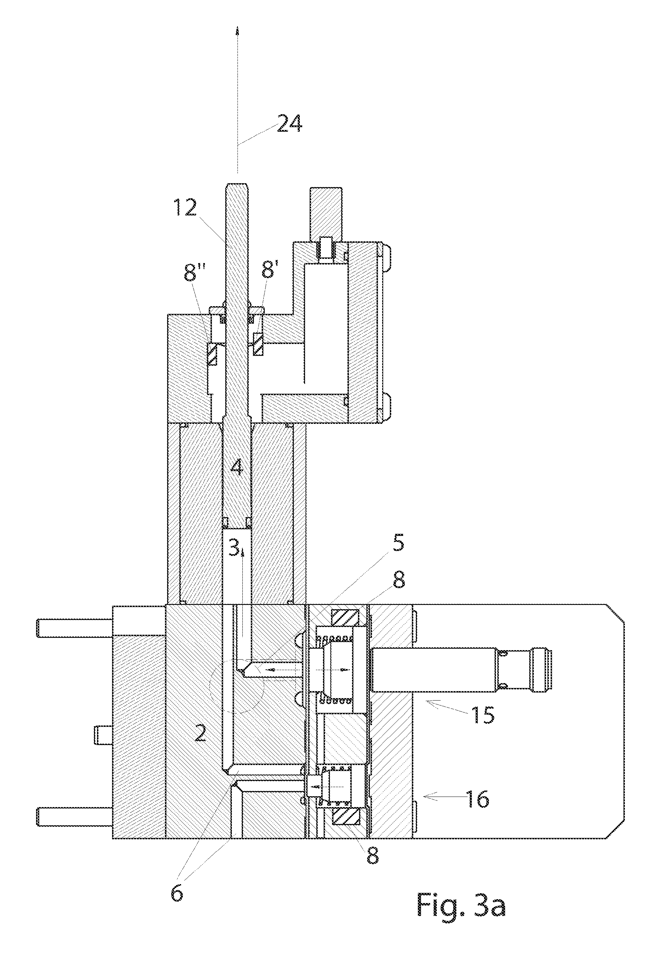

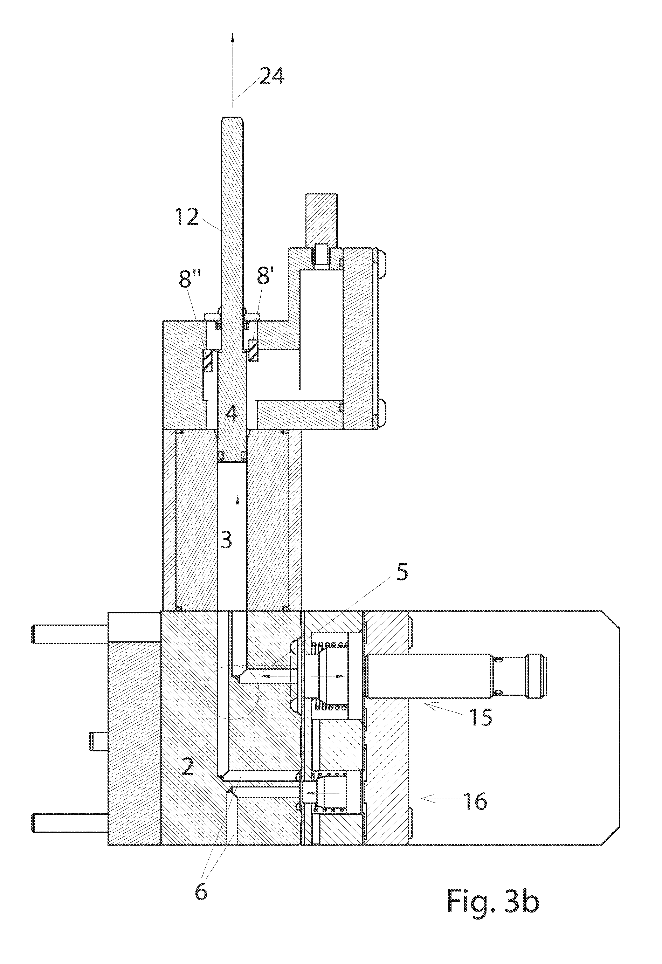

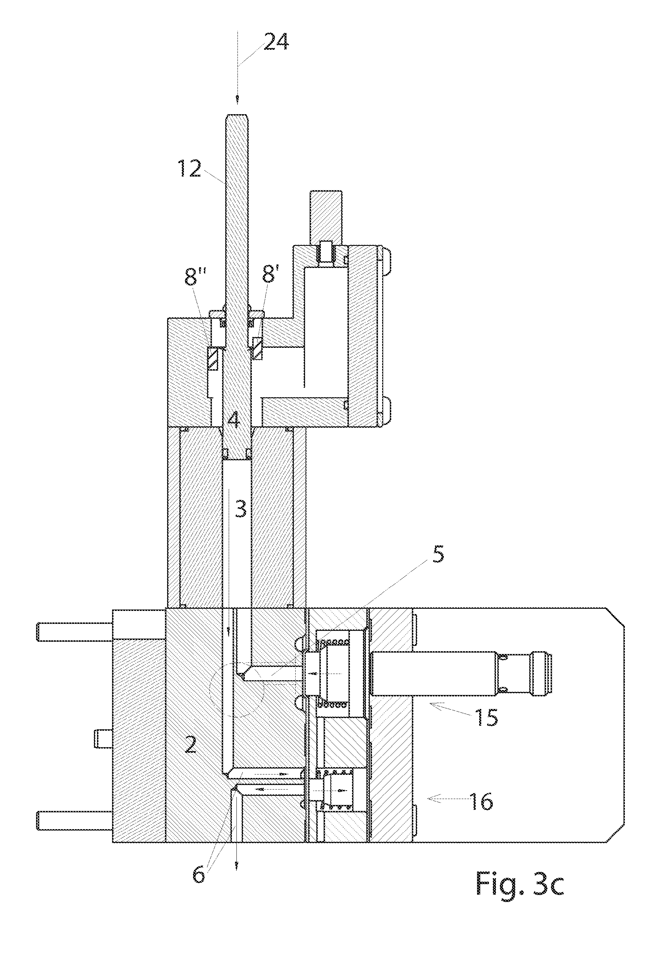

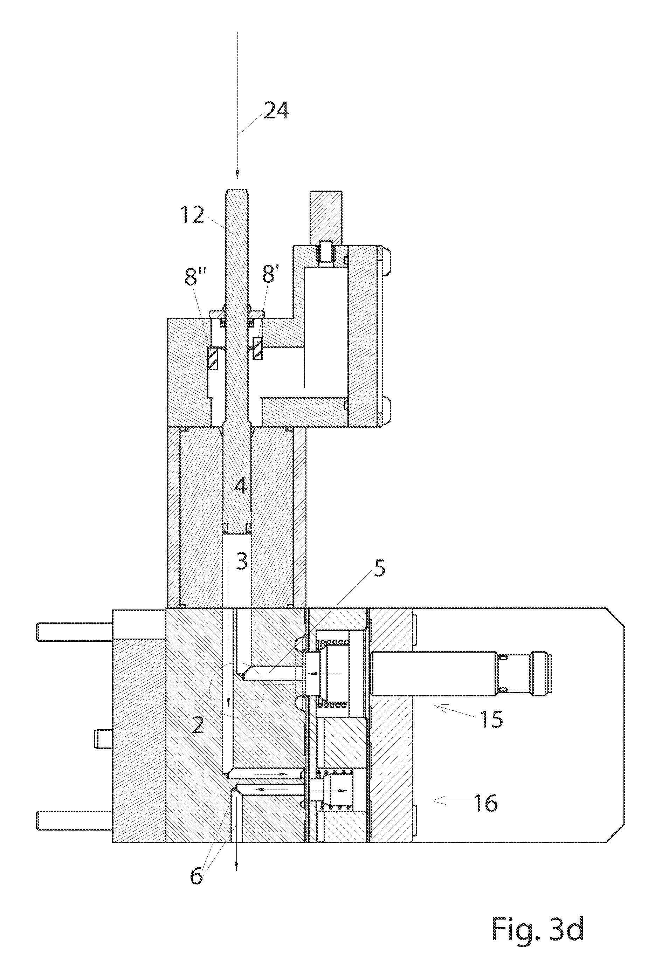

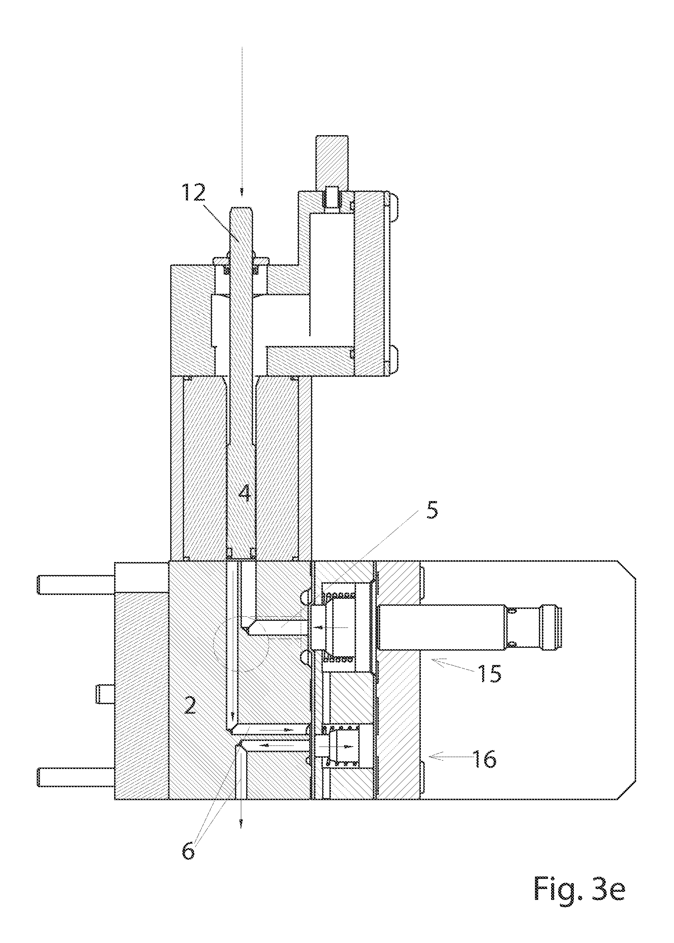

Die Figuren 3 zeigen einen der beiden Kolbendosierer zum Dosieren einer einzelnen Komponente in den verschiedenen Bewegungsphasen.

Häufig sind in einer Dosiervorrichtung zwei oder sogar mehr Dosierkolben nebeneinander vorhanden zum Dosieren mehrerer miteinander zu mischender Komponenten wie etwa Binder und Härter eines Klebers, die z. B. von einem gemeinsamen Antrieb aus mit synchronen Bewegungen ihrer Kolbenstangen gemeinsam angetrieben werden können.

Wie Figur 3 zeigt, mündet im Dosierzylinder 3, und zwar in dessen unterer Stirnfläche, einerseits eine Einlassleitung 5, über welche die zu dosierende Komponente dem Dosierzylinder 3 zugeführt wird, sowie eine Auslassleitung 6, über welche das nach dem Füllen des Dosierzylinders 3 darin enthaltene definierte Dosiervolumen der Komponente ausgestoßen wird in Richtung Auslassöffnung, die - wenn zwei oder mehr Komponenten gemischt werden sollen - in einem Mischer, beispielsweise in einem statischen Mischrohr 14, mündet, an deren Austrittsöffnung 14a dann die beiden Komponenten ausreichend durchmischt austreten.

In der Einlassleitung 5 ist das Einlassventil 15 dargestellt, zusammen mit dem dieses Ventil beaufschlagenden und steuernden Pneumatikzylinder, sowie in de Auslassleitung 6 das Auslassventil 16, welches in der Regel analog zum Einlassventil 15 aufgebaut ist und ebenfalls von einem Pneumatikzylinder beaufschlagt ist.

Die Figuren 3a und 3b zeigen das Aufziehen des Dosiervolumens in den Dosierzylinder 3:
Dabei ist das Auslassventil 16 geschlossen und das Einlassventil 15 geöffnet, sodass beim Zurückbewegen des Dosierkolbens 4 in Richtung sich vergrößerndes Volumen des Arbeitsraumes im Dosierzylinder 3 das zu dosierende Medium aus dem Vorratsbehälter in den Dosierzylinder 3 angesaugt wird bzw. einströmt, bis sich der Dosierkolben gemäß Figur 3b in der vollständig zurückgezogenen Stellung befindet, die dem gewünschten Dosiervolumen im Dosierzylinder 3 entspricht.

In dieser Stellung des Dosierkolbens 4 wird gemäß Figur 3c das Einlassventil 15 geschlossen und der Dosierkolben 4 mit Hilfe des Kolbenstangenantriebes 24 vorwärts bewegt. Das im Dosierzylinder 3 enthaltene Medium kann dadurch nur über die Auslassleitung 6 den Dosierzylinder 3 verlassen, welche hierfür natürlich geöffnet sein muss.

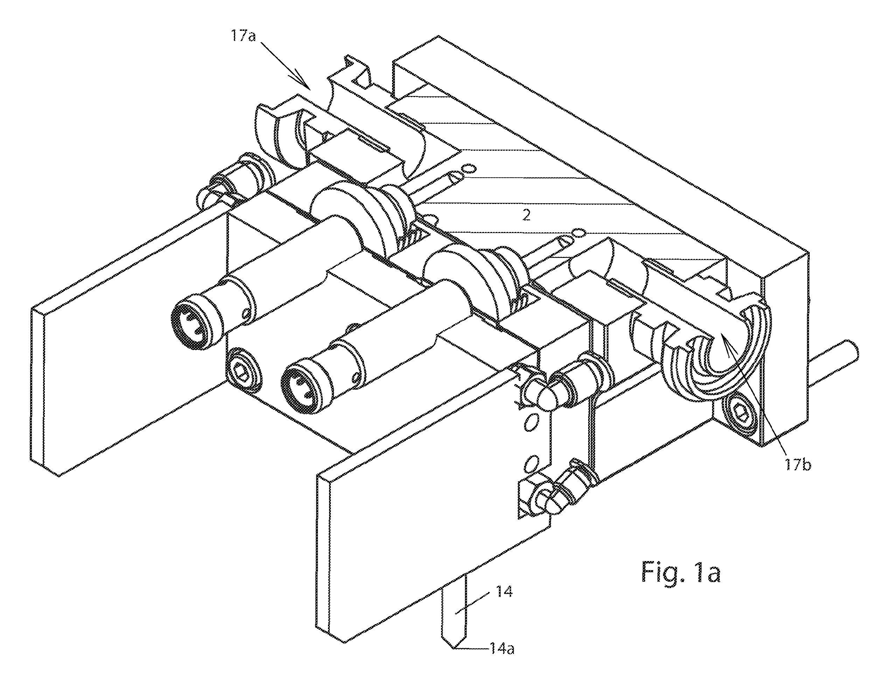

Indem der Dosierkolben 4 gemäß der Figuren 3d und 3e vorwärts geschoben wird bis zur vorderen Stirnfläche des Dosierzylinders 3, wird das gesamte darin enthaltene Dosiervolumen über die Auslassleitung 6 ausgepresst. Da die Auslassleitung 6 bis zur tatsächlichen Austrittsöffnung 14a, etwa dem vorderen Ende des Mischrohres 14 gemäß Figur 1a, ständig gefüllt ist, tritt bei jedem Hub aus der Austrittsöffnung 14a das Dosiervolumen bzw. die Summe der Dosiervolumen der beiden oder mehreren gekoppelten Dosierzylinder aus.

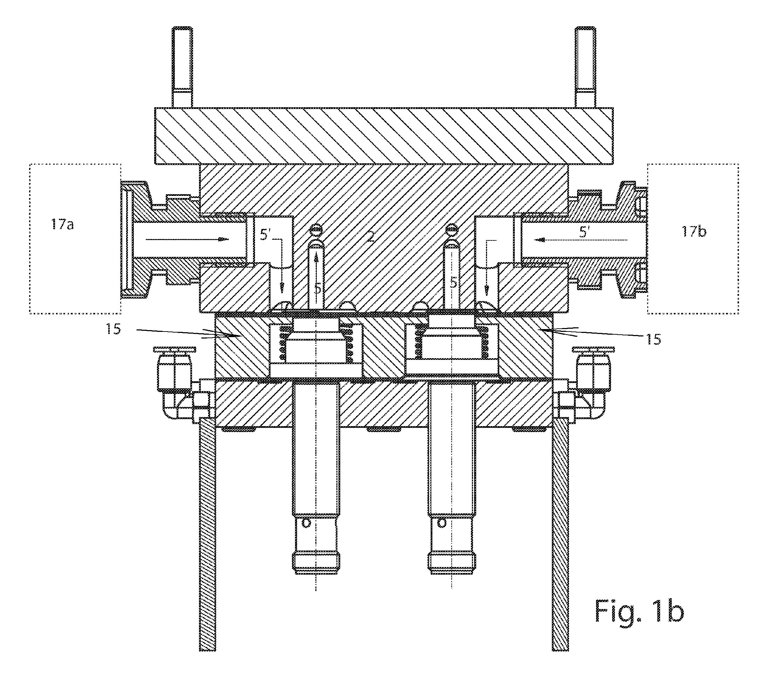

Die Figuren 1a und 1b zeigen einen Schnitt durch die beiden Einlassleitungen 5, die von den Vorratsbehältern 17a, b aus die jeweilige Komponente über ein in dieser Einlassleitung 5 jeweils angeordnetes Einlassventil 15 dem jeweiligen Kolbendosierer 1, also dessen Dosierzylinder 3, zuführen.

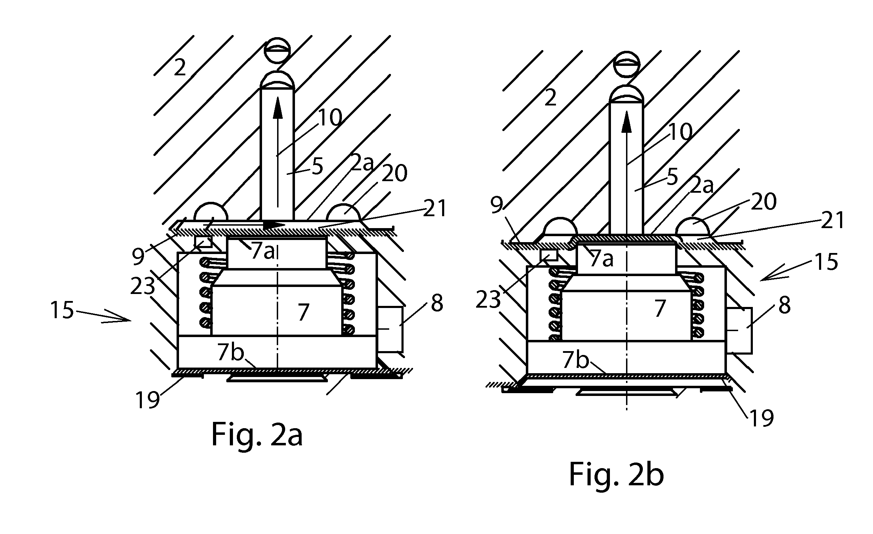

Die Einlassventile 15 sind dabei jeweils als Membranventile ausgeführt, von denen eines vergrößert in Figur 2a in der Offenstellung und in Figur 2b in der Schließstellung dargestellt ist.

Dabei ist in einer Stirnfläche des Gehäuses 2 ein Ringkanal 20 als vertiefte Nut ausgebildet, die - wie am besten Figur 1b zeigt - über die Versorgungsleitung 5' mit dem jeweiligen Vorratsbehälter 17a, b in Verbindung steht.

Im Zentrum des Ringkanals 20 mündet die Einlassleitung 5, die das Einlassventil 15 mit dem jeweiligen Dosierkolben 1 verbindet.

Der Ringkanal 20 und damit auch die Mündung der Einlassleitung 5 befinden sich in einer kreisförmigen Absenkung 21 der Stirnfläche des Grundkörpers 2, die wenigstens bis zum radial äußeren Rand des Ringkanals 20 reicht.

Die Absenkung 21 ist von einer flexiblen Schließmembran 9 überspannt, die dem nicht abgesenkten Umgebungsbereich der Stirnfläche des Grundkörpers 2 dicht anliegt und im unbelasteten Zustand, der Offenstellung gemäß Figur 2a, einen ausreichenden axialen Abstand zwischen der Schließmembran 9 und dem Boden der Absenkung 21 freilässt entsprechend der Tiefe der Absenkung 21, dass vom Ringkanal 20 die zu dosierende Komponente in Fließrichtung 10 durch diesen Abstand hindurch in die Einlassleitung 5 und von dort in den Dosierzylinder 3 mit ausreichender Füllgeschwindigkeit fließen kann.

Wegen der dichten Anlage der Schließmembran 9 um die Absenkung 21 herum am Grundkörper 2 liegt die zu dosierende Komponente nur an einer Seite der Schließmembran 9 an.

Auf der Rückseite der Schließmembran 9 gegenüberliegend der Mündung der Einlassleitung 5 befindet sich ein Schließkolben 7, der eine ebene vordere Stirnfläche besitzt, deren Durchmesser größer ist als der Durchmesser der Mündung der Einlassleitung 5, nämlich so groß wie die innerhalb des Ringkanals 20 liegende kreisförmige Pressfläche, die ebenfalls eine ebene Fläche bildet.

Der Schließkolben 7 ist axial, also in Richtung auf die Pressfläche zu und von dieser weg, bewegbar und befindet sich in seiner zurückgezogenen Position, der Offenstellung dieses Einlassventils 15 beaufschlagt der Schließkolben 7 die Schließmembran 9 noch nicht in Richtung der Pressfläche 2a, und in diese zurückgezogene Stellung ist der Schließkolben 7 mittels einer Spiralfeder 22 vorgespannt, die sich einerseits am Gehäuse 2 und andererseits an einer entsprechenden Schulter des Schließkolbens 7 abstützt.

Zum Schließen des Einlassventils 15 wird der Schließkolben 7 axial vorwärts in Richtung Pressfläche 2a bewegt, bis er die flexible Schließmembran 9 an der Pressfläche 2 anpresst und dadurch den Durchgang vom Ringkanal 20 zur Einlassleitung 5 verschließt.

In diese Schließstellung wird der Schließkolben 7 in diesem Fall pneumatisch bewegt, indem auf der hinteren Stirnfläche 7b des Schließkolbens 7 eine Steuermembran 19 anliegt, die auf ihrer vom Schließkolben 7 abgewandten Rückseite mittels Druckluft beaufschlagbar ist und den Schließkolben 7 axial vorwärts presst mit einer Kraft entsprechend dem anliegenden Pneumatikdruck bis zur Anlage der Schließmembran 9 an der Pressfläche 2a.

Erfindungsgemäß wird nun mittels eines Positionssensors 8 die Axialposition des Schließkolbens 7 zumindest in seiner Schließstellung detektiert, vorzugsweise auch in seiner Offenstellung oder am besten der gesamte Bewegungsweg des Schließkolbens jeweils detektiert. In diesem Fall befindet sich der Positionssensor 8 radial außerhalb des Schließkolbens 7 im Gehäuse 2 und ist radial gegen den Schließkolben gerichtet, um eine dort vorhandene Schulter oder Markierung vorzugsweise berührungslos abzutasten, wobei das Funktionsprinzip des Positionssensors 8 frei wählbar ist. Ebenso gut könnte der Positionssensor 8 jedoch auch in axialer Richtung gegen eine entsprechende Schulter des Schließkolbens 7 gerichtet sein.

Da die Schließstellung des Schließkolbens 7 - neben der den Schließkolben 7 betätigenden Kraft, der Vorspannung der Spiralfeder 7 etc. - auch von der Dicke und Elastizität der Schließmembran 9 abhängt, verändert sich die axiale Schließposition des Schließkolbens 7 mit zunehmendem Verschleiß der Schließmembran 9, die aufgrund des ständig daran entlang strömenden Mediums einem Abrieb unterliegt.

Sofern die Axialposition mittels des Positionssensors 8 genau genug detektiert werden kann, kann nicht nur das prinzipielle Erreichen der Schließposition des Schließkolbens 7 detektiert werden, sondern auch indirekt der Verschleißzustand der Schließmembran 9.

Ggf. können für das Detektieren der Offen- und Schließ-Stellung des Schließkolbens 7 auch getrennte Positionssensoren eingesetzt werden.

Zusätzlich kann auch ein Reißen der Schließmembran 9 überwacht werden, indem auf der vom zu dosierenden Medium, also auf der Seite des Schließkolbens 7, nahe an der Schließmembran 9, etwa am Gehäuse 2, ein Feuchtigkeitssensor 23 positioniert ist, der dann anschlägt, wenn aufgrund einer gerissenen Schließmembran 9 das feuchte zu dosierende Medium auf die Rückseite der Schließmembran 9 gelangt.

Fig. 3 zeigt ferner, dass zusätzlich auch die Axialposition des Dosierkolbens 4 durch einen weiteren Positionssensor 8' detektiert werden kann, um vor allem die korrekte vollständig zurückgezogene Position des Dosierkolbens 4 zu detektieren, von der das korrekt im Dosierzylinder 3 aufgenommene Dosiervolumen abhängt:

Im vorliegenden Fall wird mittels des zweiten Positionssensors 8' die Position des hinteren Endes des Dosierkolbens 4 in ihrer hinteren zurückgezogenen Position detektiert.

Sofern Dosierkolben 4 und Kolbenstange 12 einstückig oder eine spielfrei verbundene Einheit sind, kann statt der Position des Dosierkolbens 4 auch die Position der Kolbenstange 12 detektiert werden, zum Beispiel mittels einer daran angebrachten Markierung.

Auf diese Art und Weise kann detektiert werden, ob der Dosierkolben 4 überhaupt am Ende des Füllvorganges die korrekte Endlage erreicht hat.

Darüber hinaus ist in den Figuren 3 an der Kolbenstange ein weiterer Positionssensor 8" vorhanden - der auch mit dem Positionssensor 8' funktionsvereinigt sein kann - mit dessen Hilfe ermittelt werden soll, ob im Dosierzylinder 3 unzulässigerweise Luft enthalten ist:
Im dargestellten Fall ist davon ausgegangen, dass beim Füllen des Dosierzylinders 3 die Kolbenstange 12 und damit der damit verbundene Dosierkolben 4 aktiv mittels des Kolbenstangenantriebes 24 zurückgezogen wird, und dadurch die zu dosierende Komponente in den Dosierzylinder 3 eingesaugt wird. Eventuell mit eingesaugte Luft steht somit während dieses Vorganges im Dosierzylinder 3 unter einem Unterdruck. Entkoppelt man den Kolbenstangenantrieb 24 nach Erreichen der Endlage von der Kolbenstange 12, so würde sich die Luft im Dosierzylinder 3 auf den Umgebungsdruck einstellen und dadurch in ihrem Volumen verringern, mit der Folge, dass der Dosierkolben 4 auch ohne Beaufschlagung durch den Kolbenstangenantrieb 24 eine kleine Strecke vorwärtsfahren würde.

Um dies zu detektieren, wird der zusätzliche Positionssensor 8" etwas weiter vorne angeordnet als der Sensor 8'. Würde beim Füllen des Dosierzylinders 3 das zu dosierende Medium dagegen in den Dosierzylinder 3 eingepresst werden und der Dosierkolben 4 dadurch zurückgeschoben werden, müsste der zusätzliche Positionssensor 8" gegenüber dem Positionssensor 8' etwas weiter hinten platziert werden.

### BEZUGSZEICHENLISTE

- 1: Kolbendosierer
- 2: Grundkörper
- 2a: Pressfläche
- 3: Dosierzylinder
- 4: Dosierkolben
- 5: Einlassleitung
- 5': Versorgungsleitung
- 6: Auslassleitung
- 7: Schließkolben
- 7a: vordere Stirnfläche
- 7b: hintere Stirnfläche
- 8, 8', 8": Positionssensor
- 9: Schließmembran
- 10: Fließrichtung
- 11: Steuerung
- 12: Kolbenstange
- 13a, b: Komponente
- 14: Mischrohr
- 14a: Austrittsöffnung
- 15: Einlassventil
- 16: Auslassventil
- 17a, b: Vorratsbehälter
- 18: Motor
- 19: Steuermembran
- 20: Rückkanal
- 21: Absenkung
- 22: Spiralfeder
- 23: Feuchtigkeitssensor
- 24: Kolbenstangenantrieb

## Patentansprüche

1. Verfahren zum Überwachen eines Kolbendosierers **(1)** mit
- einem Grundkörper **(2),**
- in dem ein Kolbenzylinder **(3)** ausgebildet ist, in welchem ein Dosierkolben **(4)** verschiebbar ist,
- einer Einlassleitung **(5)** und einer Auslassleitung **(6),** die im Dosierzylinder **(3)** münden,
- einem Einlassventil **(15)** in der Einlassleitung **(5)** und einem Auslassventil **(16)** in der Auslassleitung **(6),**
- die jeweils ein Schließelement umfassen,
- wobei die Ventile **(15, 16)** als druckluftgesteuerte Membranventile ausgebildet sind, bei denen das Schließelement eine Schließmembran **(9)** beaufschlagt,
**dadurch gekennzeichnet, dass**
- wenigstens bei dem Einlassventil **(15)** die Stellung des Schließelementes detektiert wird, insbesondere auch bei dem Auslassventil **(16),**
- bei Nichterreichen der Sollwerte der Schließstellung ein Alarm ausgegeben wird,
- die Veränderung der Istposition des Schließelementes in der Schließstellung über viele Dosiervorgänge hinweg ermittelt wird und mit einem vorher festgelegten maximal zulässigen Dicken-Verschleißwert der Schließmembran **(9)** verglichen und bei Überschreiten eine Wechselanweisung bezüglich der Schließmembran **(9)** an den Betreiber ausgegeben wird.

2. Verfahren nach Anspruch **1,**
**dadurch gekennzeichnet, dass**
das Schließelement ein Schließkolben **(7)** ist.
(Grobdetektion)

3. Verfahren nach Anspruch **1** oder **2,**
**dadurch gekennzeichnet, dass**
für das Erreichen der Offenstellung als auch der Schließstellung des Schließkolbens **(7)** für diesen Sollwerte vorgegeben werden und mittels eines Positionssensors **(8)** das Erreichen der Sollwerte sowohl in der Offenstellung als auch in der Schließstellung überwacht wird.

4. Verfahren nach einem der vorhergehenden Ansprüche,
**dadurch gekennzeichnet, dass**
bei Nichterreichen der Sollwerte der Offenstellung ein Alarm ausgegeben wird.

5. Verfahren zum Überwachen eines Kolbendosierers nach einem der vorhergehenden Ansprüche,
**dadurch gekennzeichnet, dass**
bei Nichterreichen der Sollwerte der Schließstellung und gegebenenfalls auch der Offenstellung automatisch spätestens jetzt
- der Versorgungsdruck in der Einlassleitung **(5)** gemessen wird, und/oder
- der Luftdruck auf der Steuerseite der Membranventile gemessen wird und mit den jeweiligen Sollwerten verglichen wird, und/oder
- der Versorgungsdruck in der Einlassleitung **(5)** regelmäßig auch bei zufriedenstellender Funktion des Einlassventiles **(15)** als dynamischer Druck am Einlassventil **(15)** oder unmittelbar davor gemessen wird.

6. Verfahren nach einem der vorhergehenden Ansprüche,
**dadurch gekennzeichnet, dass**
- bei Inbetriebnahme des Kolbendosierers **(1)** unter realen Einsatzbedingungen die Sollwerte bestimmt und insbesondere automatisch an eine Steuerung **(11)** unter Hinzurechnung vorher manuell eingegebener Toleranzwerte weitergegeben werden oder manuell in die Steuerung **(11)** eingegeben werden.
(Feindetektion)

7. Verfahren nach einem der vorhergehenden Ansprüche,
**dadurch gekennzeichnet, dass**
der zulässige Verschleißwert festgelegt wird in Abhängigkeit von wenigstens einem Betriebsparameter, insbesondere dem das Membranventil beaufschlagenden Pneumatikdruck, der Temperatur des zu dosierenden Materials und/oder des Dosierers, oder anderen Parametern, insbesondere Elastizitätsparametern, der verwendeten Schließmembran **(9).**

8. Verfahren nach einem der vorhergehenden Ansprüche,
**dadurch gekennzeichnet, dass**
sowohl das Erreichen der Sollwerte für die Offen- und Schließstellung als auch die Veränderung der Istwerte der Schließstellung des Schließkolbens **(7)** mit jeweils dem gleichen Positionssensor **(8)** an einem Ventil **(15, 16)** durchgeführt wird.
(Kolbenstange detektieren)

9. Verfahren nach einem der vorhergehenden Ansprüche,
**dadurch gekennzeichnet, dass**
das Erreichen wenigstens der vollständig zurückgezogenen Stellung der Kolbenstange **(12)** des Dosierkolbens **(4)** im Verlaufe des Füllvorganges des Dosierzylinders **(3)** detektiert wird, zumindest wenn die Kolbenstange **(12)** von ihrem Antrieb **(24)** beaufschlagt ist, insbesondere auch wenn der Antrieb **(24)** von der Kolbenstange **(12)** entkoppelt ist.

10. Verfahren nach einem der vorhergehenden Ansprüche,
**dadurch gekennzeichnet, dass**
für das Erreichen der Offenstellung als auch der Schließstellung der Kolbenstange **(12)** für diesen Sollwerte vorgegeben werden und mittels eines Positionssensors **(8')** das Erreichen der Sollwerte sowohl im Offenzustand als auch im Schließzustand überwacht wird.
(Rissüberwachung)

11. Verfahren nach einem der vorhergehenden Ansprüche,
**dadurch gekennzeichnet, dass**
auf der Seite des Schließkolbens (7) das Vorliegen von Feuchtigkeit nahe an der Schließmembran **(9)** detektiert wird und bei Vorliegen ein Alarm zum Wechseln der Schließmembran **(9)** an den Betreiber ausgegeben wird.

12. Dosiervorrichtung, insbesondere zum gleichzeitigen Dosieren und ggf. auch Mischen mehrerer Komponenten (**13**a, b), mit
- je einem Kolbendosierer **(1)** pro Komponente,
- in jedem Kolbendosierer einem Dosierzylinder **(3),** dessen Dosierkolben **(4)** über eine Kolbenstange **(12)** von einem Motor **(18)** angetrieben wird und in dem eine Einlassleitung **(5)** vom Vorratsbehälter (**17**a, b) sowie eine Auslassleitung zur Düse mündet,
- einem Einlassventil **(15)** mit einem Schließelement in jeder Einlassleitung **(5),**
- einem Auslassventil **(16)** mit einem Schließelement in jeder Auslassleitung **(6),**
- wobei die Einlassventile **(15)** und Auslassventile **(16)** als Membranventile ausgebildet sind, deren Schließmembran **(9)** jeweils mit einem Schließkolben **(7)** als Schließelement beaufschlagt ist,
**dadurch gekennzeichnet, dass**
- ein erster Positionssensor **(8)** vorhanden ist, der die Axial-Position des
Schließkolbens **(7)** mindestens in der Schließstellung detektiert,
- ein zweiter Positionssensor **(8')** vorhanden ist, der die Position der mit einem Kolbenstangenantrieb **(24)** nicht in Verbindung stehenden Kolbenstange **(12)** detektiert.

13. Dosiervorrichtung nach Anspruch **12,**
**dadurch gekennzeichnet, dass**
der zweite Positionssensor **(8')** die Position der mit einem Kolbenstangenantrieb **(24)** nicht in Verbindung stehenden Kolbenstange **(12)** in ihrer vollständig zurückgezogenen Position detektiert.

14. Dosiervorrichtung nach Anspruch **12** und **13,**
**dadurch gekennzeichnet, dass**
ein zweiter Positionssensor **(8')** vorhanden ist, der die Position der mit dem Kolbenstangenantrieb **(24)** in Verbindung stehenden Kolbenstange **(12),** insbesondere in ihrer vollständig zurückgezogenen Position, detektiert.

15. Dosiervorrichtung nach Anspruch **12** und **13,**
**dadurch gekennzeichnet, dass**
der Kolbenstangenantrieb **(24)** von der Kolbenstange **(12)** abkoppelbar ist.

## Claims

1. A method for monitoring a piston dosing device (1) including
- a base element (2),
- in which a piston cylinder (3) is configured in which a dosing piston (4) is movable in a linear manner,
- an inlet conduit (5) and an outlet conduit (6) which lead into the dosing cylinder (3),
- an inlet valve (15) in the inlet conduit (5) and an outlet valve (16) in the outlet conduit (6),
- respectively including a closure element,
- wherein the valves (15, 16) are configured as compressed air controlled membrane valves in which the closure element loads a closing membrane (9),
**characterized in that**
- a position of the closure element is detected at least for the inlet valve (15), in particular also for the outlet valve (16),
- an alarm is put out when nominal values of the closed position are not reached,
- a variation of an actual position of the closure element in the closed position is determined over numerous dosing processes and compared with a predetermined maximum permissible thickness wear value of the closure membrane (9) and when the maximum permissible thickness wear value is exceeded, a change instruction for the closure membrane (9) is put out to the operator.

2. The method according to claim 1,
**characterized in that**
the closure element is a closure piston (7).
(coarse detection)

3. The method according to claim 1 or 2,
**characterized in that**
nominal values are predetermined for the closing piston (7) for reaching the open position and also the closed position, and reaching the target values in the open position and also in the closed position is monitored by a position sensor (8).

4. The method according to one of the preceding claims,
**characterized in that**
an alarm is put out when the target values for the open position are not reached.

5. A method for monitoring a piston dosing device according to one of the preceding claims,
**characterized in that**
the following steps are performed automatically at the latest when the nominal values for the closed position and optionally also for the open position are not reached,
- measuring a supply pressure in the inlet conduit (5), and/or
- measuring an air pressure on the control side of the membrane valves and comparing it with the respective target values, and/or
- measuring a supply pressure in the inlet conduit (5) in regular intervals also for a sufficient function of the inlet valve (15) as a dynamic pressure at the inlet valve (15) or directly in front.

6. The method according to one of the preceding claims,
**characterized in that**
- nominal values are measured when starting up the piston dosing device (1) under real operating conditions and in particular the nominal values are automatically forwarded to a control (11) while adding previously manually entered tolerance values, or the nominal values are manually entered into the control (11).
(fine detection)

7. The method according to one of the preceding claims,
**characterized in that**
the permissible wear value is predetermined as a function of at least one operating parameter, in particular the pneumatic pressure loading the membrane valve, the temperature of the material to be dosed, and/or of the dosing device, or other parameters, in particular elasticity parameters of the employed closing membrane.

8. The method according to one of the preceding claims,
**characterized in that**
reaching the nominal values for the open position and also for the closed position and also changing of the actual values of the closed position of the closing piston (7) is performed respectively with the same position sensor (8) at a valve (15, 16).
(detecting of piston rod)

9. The method according to one of the preceding claims,
**characterized in that**
reaching at least the completely pulled pack position of the piston rod (12) of the dosing piston (4) is detected during the filling process of the dosing cylinder (3) at least when the piston rod (12) is loaded by its drive (24), in particular also when the drive (24) is decoupled from the piston rod (12).

10. The method according to one of the preceding claims,
**characterized in that**
nominal values are predetermined for reaching the open position and also the closed position of the piston rod (12) and reaching the nominal value in the open position and also in the closed position is monitored by a position sensor (8').
(crack monitoring)

11. The method according to one of the preceding claims,
**characterized in that**
a presence of moisture is detected proximal to the closing membrane (9) on a side of the closing piston (7) and when moisture is present an alarm for switching the closing membrane (9) is put out to the operator.

12. A dosing device, in particular for simultaneous dosing, and optionally also mixing plural components (13a, b), comprising:
- a respective piston dosing device (1) per component,
- a dosing cylinder (3) in each piston dosing device, wherein a dosing piston (4) of the dosing cylinder is driven by a motor (18) through a piston rod (12) and wherein an inlet conduit (5) from the storage container (17a, b) and an outlet conduit to the nozzle opens into the dosing cylinder,
- an inlet valve (15) with a closure element in each inlet conduit (5),
- an outlet valve (16) with a closure element in each outlet conduit (6),
- wherein the inlet valves (15) and the outlet valves (16) are configured as membrane valves, whose closing membrane (9) is respectively loaded with a closing piston (7) configured as a closure element,
**characterized in that**
- a first position sensor (8) is provided which detects an axial position of the closing piston (7) at least in the closing position,
- wherein a second position sensor (8') is provided which detects a position of the piston rod (12) that is not connected with a piston rod drive (24).

13. The dosing device according to claim 12,
**characterized in that**
the second position sensor (8') detects the position of the piston rod (12) in its completely pulled back position, wherein the piston rod is not connected with the piston rod drive (24).

14. The dosing device according to claim 12 and 13,
**characterized in that**
a second position sensor (8') is provided which detects a position of the piston rod (12) that is connected with the piston rod drive (24), wherein in particular a completely pulled back position of the piston rod (12) is detected.

15. The dosing device according to claim 12 and 13,
**characterized in that**
the piston rod drive (24) can be decoupled from the piston rod (12).

## Revendications

1. Procédé de contrôle d'un doseur à piston (1), comprenant :
- un corps de base (2),
- dans lequel est formé un cylindre à piston (3) dans lequel peut coulisser un piston de dosage (4),
- un conduit d'admission (5) et un conduit d'évacuation (6), qui débouchent dans le cylindre de dosage (3),
- une soupape d'admission (15) dans le conduit d'admission (5) et une soupape d'évacuation (16) dans le conduit d'évacuation (6),
- qui comprennent chacune un élément de fermeture,
- dans lequel les soupapes (15, 16) se présentent sous la forme de soupapes à membrane commandées par de l'air comprimé, dans lesquelles l'élément de fermeture alimente une membrane de fermeture (9),
**caractérisé en ce que** :
- au moins dans la soupape d'admission (15), on détecte la position de l'élément de fermeture, en particulier également dans la soupape d'évacuation (16),
- dans le cas où les valeurs théoriques de la position de fermeture ne sont pas atteintes, une alarme est délivrée,
- la modification de la position réelle de l'élément de fermeture en position de fermeture est déterminée sur plusieurs opérations de dosage et comparée à une valeur d'usure d'épaisseur maximale autorisée de la membrane de fermeture (9) établie précédemment et, lors d'un dépassement, une indication de changement concernant la membrane de fermeture (9) est délivrée à l'exploitant.

2. Procédé selon la revendication 1,
**caractérisé en ce que** :
l'élément de fermeture est un piston de fermeture (7).
(Détection grossière)

3. Procédé selon la revendication 1 ou la revendication 2,
**caractérisé en ce que** :
pour atteindre la position d'ouverture ainsi que la position de fermeture du piston de fermeture (7), on alloue à celles-ci des valeurs théoriques et l'on contrôle au moyen d'un capteur de position (8) que l'on atteint les valeurs théoriques autant en position d'ouverture qu'en position de fermeture.

4. Procédé selon l'une quelconque des revendications précédentes, **caractérisé en ce que** :
une alarme est délivrée lorsque l'on n'atteint pas les valeurs théoriques de la position d'ouverture.

5. Procédé de contrôle d'un doseur à piston selon l'une quelconque des revendications précédentes,
**caractérisé en ce que** :
si l'on n'atteint pas les valeurs théoriques de la position de fermeture et éventuellement aussi de la position d'ouverture automatiquement au plus tard à présent,
- la pression d'alimentation dans le conduit d'admission (5) est mesurée, et/ou
- la pression d'air est mesurée du côté commande des soupapes à membrane et on la compare aux valeurs théoriques respectives, et/ou
- la pression d'alimentation dans le conduit d'admission (5) est mesurée régulièrement même en cas de fonctionnement satisfaisant de la soupape d'admission (15) comme pression dynamique sur la soupape d'admission (15) ou directement en amont de celle-ci.

6. Procédé selon l'une quelconque des revendications précédentes, **caractérisé en ce que** :
- lors de la mise en service du doseur à piston (1) dans des conditions d'utilisation réelles, on détermine les valeurs théoriques que l'on retransmet en particulier automatiquement à une commande (11) en plus des valeurs de tolérance introduites manuellement précédemment ou que l'on introduit dans la commande (11) manuellement.
(Détection fine)

7. Procédé selon l'une quelconque des revendications précédentes, **caractérisé en ce que** :
la valeur d'usure autorisée est établie en fonction d'au moins un paramètre d'exploitation, en particulier la pression pneumatique alimentant la soupape à membrane, la température du matériau à doser et/ou du doseur ou d'autres paramètres, en particulier les paramètres d'élasticité de la membrane de fermeture utilisée (9).

8. Procédé selon l'une quelconque des revendications précédentes, **caractérisé en ce que** :
autant le fait d'atteindre les valeurs théoriques pour les positions d'ouverture et de fermeture que la modification des valeurs réelles de la position de fermeture du piston de fermeture (7) sont réalisés avec respectivement le même capteur de position (8) sur une soupape (15, 16).
(Détection de la tige de piston)

9. Procédé selon l'une quelconque des revendications précédentes, **caractérisé en ce que** :
le fait d'atteindre au moins la position complètement retirée de la tige (12) du piston de dosage (4) est détecté au cours de l'opération de remplissage du cylindre de dosage (3) au moins lorsque la tige de piston (12) est alimentée par son entraînement (24), en particulier même si l'entraînement (24) est désaccouplé de la tige de piston (12).

10. Procédé selon l'une quelconque des revendications précédentes, **caractérisé en ce que** :
pour atteindre la position d'ouverture ainsi que la position de fermeture de la tige de piston (12), on détermine pour celles-ci des valeurs théoriques et on contrôle au moyen d'un capteur de position (8') si les valeurs théoriques sont atteintes autant à l'état d'ouverture qu'à l'état de fermeture.
(Contrôle des fissures)

11. Procédé selon l'une quelconque des revendications précédentes, **caractérisé en ce que** :
l'on détecte du côté du piston de fermeture (7) la présence d'humidité à proximité de la membrane de fermeture (9) et, si c'est le cas, une alarme est délivrée à l'exploitant pour changer la membrane de fermeture (9).

12. Dispositif de dosage, en particulier pour le dosage et éventuellement aussi le mélange simultanés de plusieurs composants (13a, b), comprenant :
- respectivement un doseur à piston (1) par composant,
- dans chaque doseur à piston, un cylindre de dosage (3) dont le piston de dosage (4) est entraîné via une tige de piston (12) par un moteur (18) et dans lequel débouchent un conduit d'admission (5) venant d'un réservoir (17a, b) et un conduit d'évacuation dans la tuyère,
- une soupape d'admission (15) avec un élément de fermeture dans chaque conduit d'admission (5),
- une soupape d'évacuation (16) avec un élément de fermeture dans chaque conduit d'évacuation (6),
- dans lequel les soupapes d'admission (15) et les soupapes d'évacuation (16) se présentent sous la forme de soupapes à membrane, dont la membrane de fermeture (9) est alimentée respectivement avec un piston de fermeture (7) comme élément de fermeture,
**caractérisé en ce que** :
- il y a un premier capteur de position (8) qui détecte la position axiale du piston de fermeture (7) au moins en position de fermeture, et
- il y a un second capteur de position (8') qui détecte la position de la tige de piston (12) qui n'est pas liée à un entraînement de tige de piston (24).

13. Dispositif de dosage selon la revendication 12,
**caractérisé en ce que** :
le second capteur de position (8') détecte la position de la tige de piston (12) qui n'est pas liée à un entraînement (24) de la tige de piston dans sa position complètement retirée.

14. Dispositif de dosage selon les revendications 12 et 13,
**caractérisé en ce que** :
il y a un second capteur de position (8') qui détecte la position de la tige de piston (12) qui n'est pas liée à l'entraînement (24) de la tige de piston, en particulier dans sa position complètement retirée.

15. Dispositif de dosage selon les revendications 12 et 13,
**caractérisé en ce que** :
l'entraînement (24) de la tige de piston peut être désaccouplé de la tige de piston (12).
